# EUROPEAN PATENT APPLICATION

(11) **EP 4 227 824 A1**
(43) Date of publication of application: **16.08.2023**
(21) Application number: 22156328.1
(22) Date of filing: 11.02.2022
(51) Int. Cl.: G06F 16/36, G06F 16/38

(54) **METHOD AND SYSTEM FOR GENERATING METADATA TAGS FOR A PLURALITY OF ENGINEERING OBJECTS**

(71) Applicant: Siemens Aktiengesellschaft, 80333 München (DE)
(72) Inventor: Sahu, Sukalyan, 560100 Bangalore, Karnataka (IN)
(74) Representative: Isarpatent

(57) **Abstract**

The present invention provides a method and system for of generating a plurality of metadata tags (124A-N) for a plurality of engineering objects (108A-N) of an engineering project (106). The method comprises receiving a request to generate the plurality of metadata tags (124A-N) for each of the plurality of engineering objects (108A-N) of the engineering project (106). The method further comprises determining from the analyzed plurality of documents, a plurality of data items in which information associated with each of the plurality of engineering objects (108A-N) is mentioned in the analyzed plurality of documents. The method further comprises generating a dataset comprising information associated with one or more properties of the plurality of engineering objects (108A-N), from the determined plurality of data items. The method further comprises generating the plurality of metadata tags (124A-N) for each of the plurality of engineering objects (108A-N) of the engineering project (106).

## Description

The present invention relates to a field of engineering of computer assisted programming, and more particularly relates to a method and system for generating metadata tags for a plurality of engineering objects.

A technical installation such as an industrial plant comprises a plurality of engineering objects which function together to complete one or more objectives of the technical installation. Examples of the plurality of engineering objects may include, for example, a programmable logic controller, one or more field devices, or any other automation devices. Examples of the one or more devices includes but is not limited to, motors, rotors, mixers, furnaces, heaters, refrigerators, control valves, pumps, and actuators.

The plurality of engineering objects are operated by use of a plurality of virtual engineering objects which are executed in a processing unit of the plurality of engineering objects. Examples of the plurality of virtual engineering objects comprises program files, programming blocks, and machine learning models. The plurality of virtual engineering objects comprises instructions to run the plurality of engineering objects smoothly. However, the plurality of virtual engineering objects lack metadata associated with the plurality of engineering objects. Examples of the metadata of an engineering object comprises a functionality, a specification, a manufacturer detail, and maintenance details associated with the specific engineering object. The metadata further comprises information about a purpose of the engineering object in the technical installation. The metadata associated with the plurality of engineering objects help a commissioning engineer and/or a human operator to effectively commission and control the plurality of engineering objects.

Typically, the metadata associated with the plurality of engineering objects is stored in a plurality of documents. The plurality of documents comprises process related documents like process operation description document, process flowchart, and process control philosophy, process and instrumentation diagrams, and non-process documents such as bill of materials, brochures, and product manuals. A human operator may have to go through the plurality of documents extract the metadata about the plurality of engineering objects. The technical installation may have hundreds, if not thousands of engineering objects. Each engineering object may have a large number of associated documents. Each of the documents comprises a plurality of data items which has dependencies with other data items in other documents of the plurality of documents. For example, a name of a first engineering object may be present in a first document, and a location of the first engineering object may be present in a second document. The first document and the second document may comprise information associated with other engineering objects of the plurality of engineering objects. For effective commissioning of the engineering object, the human operator has to map information present in the first and second document to the first engineering object.

Hence, data items of thousands of documents have to be analyzed, and mapped with each other during a commissioning period. The commissioning period would typically span a few months. It is humanly impossible to read, analyze and extract the data items in the thousands of documents within the said time span. Further, a number of documents which can be analyzed by the human operator may be limited. Thus, the metadata extracted by the human operator may be incomplete.

In light of above, there exists a need for an efficient method and system for generating metadata items for a plurality of engineering objects of an engineering project.

Therefore, it is an object of the present invention to provide a method and system for generating metadata tags for a plurality of engineering objects of an engineering project.

The object of the invention is achieved by a method for generating metadata tags for a plurality of engineering objects of an engineering project. The method comprises receiving, by a processing unit, a request to generate the plurality of metadata tags for each of the plurality of engineering objects of the engineering project in a technical installation. The technical installation is at least one of an industrial manufacturing plant, an industrial processing plant, an industrial power plant, or a public building such as a hospital. The plurality of engineering objects are devices which function together in the technical installation to achieve one or more objectives of the technical installation. Examples of the plurality of engineering objects comprises servers, robots, switches, automation devices, programmable logic controllers (PLC)s, human machine interfaces (HMIs), motors, valves, pumps, actuators, sensors and other industrial equipment(s).

The plurality of engineering objects comprises a processing unit and a memory. The memory is configured to store one or more engineering programs and a plurality of programming blocks. The processing unit of the one or more of the plurality of engineering objects is configured to execute the one or more engineering program to achieve one or more key performance indicators associated with the engineering project. Examples of the one or more key performance indicators includes a processing speed, a memory requirement, and a process efficiency of the one or more engineering programs, when the one or more engineering programs are executed by the processing unit of the one or more engineering objects. The plurality of metadata tags comprises information associated with each of the plurality of engineering objects.

A metadata tag of an engineering object comprises a purpose, a function, a specification, a manufacturer details, a unique identification code and a maintenance detail associated with the specific engineering object. The metadata tag further comprises an identification number and a location of the specific engineering object. A commissioning engineer is enabled to read the metadata tag to understand a functionality, a process related information and a hardware related information of the specific engineering object. In one example, the metadata file is stored in a memory of the engineering object as a metadata file. In another example, the metadata tag is stored as part of a program file associated with the specific engineering object. The plurality of engineering objects are operated by use of a plurality of virtual engineering objects. Examples of the plurality of virtual engineering objects comprises program files, programming blocks, program logic and machine learning models. For example, the plurality of virtual engineering objects comprises the one or more engineering programs executed by the processing unit of the plurality of engineering objects. The plurality of virtual engineering objects comprises instructions to run the plurality of engineering objects smoothly.

In a preferred embodiment, the method further comprises converting, by the processing unit, a plurality of documents, associated with the engineering project, into an automation markup language file. The plurality of documents comprises process related documents like process operation description document, process flowchart, and process control philosophy, process and instrumentation diagrams, and non-process documents such as bill of materials, brochures, and product manuals. The plurality of documents are converted by application of a natural language processing algorithm on the plurality of documents. The generated automation markup language file is further analyzed by the processing unit.

In the preferred embodiment, the method further comprises generating, by the processing unit, an ontology schema based on an analysis of the automation markup language file. In one example, the ontology schema is a knowledge graph based ontology schema. The ontology schema comprises information associated with interrelationships between one or more data items in the automation markup language file and the plurality of engineering objects of the engineering project. The method further comprises classifying, by the processing unit, a plurality of nodes of the ontology schema into a plurality of groups, by application of a deep learning model on the plurality of nodes of the ontology schema. Examples of the deep learning model includes, but is not limited to convolutional neural network (CNN) and long short term memory networks (LSTM). The deep learning model is trained to determine references to the plurality of engineering objects, in the plurality of documents. Further, the deep learning model is trained to extract a plurality of properties associated with the plurality of engineering objects, from the plurality of documents, or from the ontology schema associated with the plurality of documents. Examples of the plurality of properties comprises a voltage rating, a power rating, a purpose, a function, a specification, a manufacturer details, and a maintenance details associated with the plurality of engineering objects. Thus, the method further comprises analyzing, by the processing unit, the plurality of documents associated with the engineering project, by use of the deep learning model.

In a preferred embodiment, the method further comprises determining, by the processing unit, from the analyzed plurality of documents, a plurality of data items which comprises information associated with the plurality of properties of each of the plurality of engineering objects.

The plurality of properties of an engineering object comprises at least a name, a functionality, a specification, a power rating, a location, and a type of the engineering object. In one example, the plurality of data items are excerpts of the plurality of documents in which the one or more properties of the plurality of engineering objects is mentioned. For example, the plurality of engineering objects may include a motor. Further, the plurality of documents may include a product manual of the motor and a process and instrumentation diagram (P&ID diagram) of the technical installation. In such a case, a first data item of the plurality of data items includes a portion of the product manual which illustrates a power rating and voltage rating of the motor. A second data item of the plurality of data items comprises a portion of the P&ID diagram which illustrates a interconnection of the motor with other engineering objects in the technical installation.

In one embodiment, determination of the plurality of data items is executed iteratively via a plurality of iterations.

In such a case, each iteration of the plurality of iterations begins with a first step of analyzing, by the processing unit, an input set of artifacts in the ontology schema or the plurality of documents by application of the Deep learning model. The input set of artifacts comprises a plurality of combinations of the plurality of data items in the plurality of documents.

For example, the plurality of documents may contain a first document comprising two data items: a location of a motor and a location of a furnace. Further, the plurality of documents may contain a second document comprising two data items: a name of a motor and a name of a furnace. In such a case, the input set of artifacts comprises the plurality of combinations comprising a first combination of the location of the motor and the name of the motor, a second combination of the location of the motor and the name of the furnace, a third combination of the location of the furnace and the name of the motor, and a fourth combination of the location of the furnace and the name of the furnace. Thus, the input set of artifacts comprises information about the first combination, the second combination, the third combination, and the fourth combination.

Furthermore, each iteration further comprises a second step of determining, by the processing unit, one or more relevant data items in the input set of artifacts, based on the analysis of the input set of artifacts. The deep learning model is trained to determine the one or more relevant data items in the input set of artifacts. Then, the iteration further comprises a third step of eradicating, by the processing unit, data items which are not relevant data items, from the input set of artifacts to generate a first set of smart artifacts. Then, the iteration further comprises a fourth step of generating, by the processing unit, a preprocessing dataset from the analyzed input set of artifacts. The preprocessing dataset comprises one or more relevant data items from the input set of artifacts. Finally, a final step of each iteration comprises generating, by the processing unit, a second set of smart artifacts based on a comparison of the generated first set of smart artifacts and the preprocessing dataset. The second set of smart artifacts are used as the input set of artifacts in a subsequent iteration of the plurality of iterations.

In the preferred embodiment, the method further comprises mapping, by the processing unit, the each of the second set of smart artifacts to one or more of the plurality of engineeing objects.

In the preferred embodiment, the method further comprises determining, by the processing unit, a set of nodes of the ontology schema, which corresponds to the determined one or more smart artifacts. The method further comprises analyzing, by the processing unit, the determined set of nodes to determine the plurality of data items in the analyzed plurality of documents.

The method further comprises generating, by the processing unit, a dataset comprising information associated with the plurality of properties of the plurality of engineering objects, from the determined plurality of data items. Further, the dataset comprises interrelationships and interconnections between each of the plurality of engineering objects of the engineering project.

In the preferred embodiment, the method comprises analyzing, by the processing unit, the determined plurality of data items by using the natural language processing algorithm. The method further comprises determining, by the processing unit, the one or more properties of each of the plurality of engineering object of the engineering project based on the analysis of the plurality of data items in which information comprise the one or more properties associated with the plurality of engineering objects.

In the preferred embodiment, the method further comprises generating, by the processing unit, a metadata item comprising information associated with the plurality of properties of each of the plurality of engineering objects. The method further comprises generating, by the processing unit, a unique identification tag for each of the plurality of engineering objects. The method further comprises generating, by the processing unit, the plurality of metadata tags by combining the metadata item associated with each engineering object and the unique identification tag of the respective engineering object of the plurality of engineering objects.

The method further comprises generating, by the processing unit, the plurality of metadata tags for each of the plurality of engineering objects of the engineering project.

The plurality of metadata tags comprises a location of each of the plurality of engineering objects of the engineering project. The method further comprises mapping, by the processing unit, each of the plurality of metadata tags to a virtual engineering object corresponding to each of the plurality of engineering objects. The method further comprises displaying, by the processing unit, the location of each of the plurality of engineering objects in a display device. Advantageously, the plurality of properties of the plurality of engineering objects are available to a commissioning engineer through the generated plurality of metadata tags. For example, advantageously, a location of each of the plurality of engineering objects is readily available to a human operator via the generated plurality of metadata tags. Further advantageously, the plurality of metadata tags are generated automatically by the processing unit, thus sparing the human operator of reading thousands of pages of documents associated with the plurality of engineering objects. Furthermore advantageously, all information pertaining to an engineering object is collated into a metadata tag associated with the engineering object, and is thus readily available to the human operator. Furthermore, a code of one or more engineering programs is enabled to access engineering data associated with the plurality of engineering objects from the plurality of metadata tags.

In the preferred embodiment, the method further comprises integrating, by the processing unit, the plurality of metadata tags into the plurality of virtual engineering objects associated with the plurality of engineering objects of the engineering project. In one example, the plurality of virtual engineering objects are runtime objects which denote one or more of the plurality of engineering objects. In such a case, the generated metadata tags are integrated into the said runtime objects.

The object of the present invention is also achieved by an engineering system for generating a plurality of metadata tags for a plurality of engineering objects in a technical installation. The engineering system comprises one or more processor(s) and a memory coupled to the processor. The memory comprises an automation module stored in the form of machine-readable instructions executable by the processor.

The automation module is configured for performing the method as described above.

The object of the present invention is also achieved by an industrial environment. The industrial environment comprising an engineering system, a technical installation comprising one or more physical components and one or more client devices communicatively coupled to the engineering system and the technical installation. The engineering system is configured to perform the above described method steps.

The object of the present invention is also achieved by a computer-program product having machine-readable instructions stored therein, that when executed by one or more processor(s), cause the one or more processor(s) to perform method steps as described above.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: is a block diagram of an industrial environment capable of generating metadata tags, according to an embodiment of the present invention;
- FIG 2: is a block diagram of an engineering system, such as those shown in FIG 1, in which an embodiment of the present invention can be implemented;
- FIG 3: is a block diagram of an automation module, such as those shown in FIG 2, in which an embodiment of the present invention can be implemented;
- FIG 4A-D: is a process flowchart illustrating an exemplary method of generating metadata tags for a plurality of engineering objects of an engineering project, according to an embodiment of the present invention;
- FIG 5: is a schematic representation of an exemplary process of generating metadata tags for a plurality of engineering objects, according to an embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

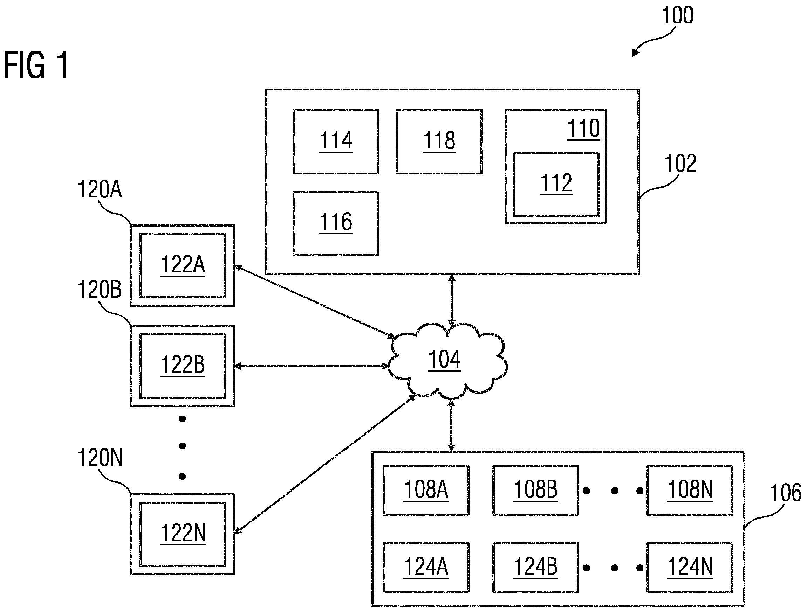

FIG 1 is a block diagram of an industrial environment 100 capable of generating a plurality of metadata tags 124A-N for a plurality of engineering objects 108A-N of an engineering project 106, according to an embodiment of the present invention. In FIG 1, the industrial environment 100 includes an engineering system 102, the engineering project 106 and one or more client devices 120A-N. As used herein, "industrial environment" refers to a processing environment comprising configurable computing physical and logical resources, for example, networks, servers, storage, applications, services, etc., and data distributed over a platform, such as cloud computing platform. The industrial environment 100 provides on-demand network access to a shared pool of the configurable computing physical and logical resources. The engineering system 102 is communicatively connected to a technical installation via the network 104 (such as Local Area Network (LAN), Wide Area Network (WAN), Wi-Fi, Internet, any short range or wide range communication). The engineering system 102 is also connected to the one or more client devices 120AN via the network 104. The technical installation functions smoothly by use of the engineering project 106. The engineering project 106 comprises a sum total of software and hardware components necessary for the smooth functioning of the technical installation. An example of the hardware components include the plurality of engineering objects 108A-N. Examples of the plurality of engineering objects 108A-N include, for example, a programmable logic controller, one or more field devices, or any other automation devices. The plurality of engineering objects 108A-N may further include servers, robots, switches, automation devices, programmable logic controllers (PLC)s, human machine interfaces (HMIs), motors, valves, pumps, actuators, sensors and other industrial equipment(s). An example of the software component include a plurality of virtual engineering objects. The plurality of engineering objects 108A-N are operated by use of a plurality of virtual engineering objects. Examples of the plurality of virtual engineering objects comprises program files, programming blocks, and machine learning models. The plurality of virtual engineering objects comprises instructions to run the plurality of engineering objects 108A-N smoothly.

The engineering system 102 is connected to the plurality of engineering objects 108A-N in the engineering project 106 via the network 104. The plurality of engineering objects 108A-N may be connected to each other or several other components (not shown in FIG 1) via physical connections. The physical connections may be through wiring between the plurality of engineering objects 108A-N. Alternatively, the plurality of engineering objects 108A-N may also be connected via non-physical connections (such as Internet of Things (IOT)) and 5G networks. Although, FIG 1 illustrates the engineering system 102 connected to one engineering project 106, one skilled in the art can envision that the engineering system 102 can be connected to several engineering projects 106 located at different geographical locations via the network 104.

The one or more client devices 120A-N may be a desktop computer, laptop computer, tablet, smart phone and the like. Each of the one or more client devices 120A-N is provided with an 122A-N for generating and/or editing the plurality of virtual engineering objects respectively. For example, the one or more client devices 120A-N can access the engineering system 102 for automatically generating engineering programs. The one or more client devices 120A-N can access cloud applications (such as providing performance visualization of the plurality of engineering objects 108A-N via a web browser). Throughout the specification, the terms "client device" and "user device" are used interchangeably.

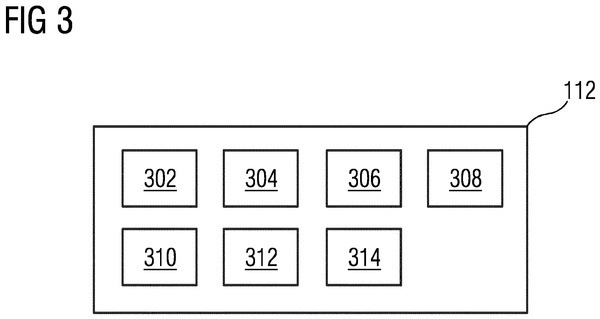

The engineering system 102 may be a standalone server deployed at a control station or may be a remote server on a cloud computing platform. In a preferred embodiment, the engineering system 102 may be a cloud-based engineering system. The engineering system 102 is capable of delivering applications (such as cloud applications) for managing a technical installation comprising the plurality of engineering objects 108A-N. The engineering system 102 may comprise a platform 110 (such as a cloud computing platform), an automation module 112, a server 114 including hardware resources and an operating system (OS), a network interface 116 and a database 118. The network interface 116 enables communication between the engineering system 102, the technical installation, and the one or more client device(s) 120A-N. The interface (such as cloud interface) (not shown in FIG 1) may allow the engineers at the one or more client device (s) 120A-N to access engineering project files stored at the engineering system 102 and perform one or more actions on the engineering project files as same instance. The server 114 may include one or more servers on which the OS is installed. The servers 114 may comprise one or more processors, one or more storage devices, such as, memory units, for storing data and machine-readable instructions for example, applications and application programming interfaces (APIs), and other peripherals required for providing computing (such as cloud computing) functionality. The platform 110 enables functionalities such as data reception, data processing, data rendering, data communication, etc. using the hardware resources and the OS of the servers 114 and delivers the aforementioned services using the application programming interfaces deployed therein. The platform 110 may comprise a combination of dedicated hardware and software built on top of the hardware and the OS. In an exemplary embodiment, the platform 110 may correspond to an Integrated Development Environment (IDE) comprising program editors and compilers which allow the users of the one or more client devices 120A-N to generate the plurality of virtual engineering objects. The platform 110 may further comprise an automation module 112 configured for generating engineering programs. Details of the automation module 112 is explained in FIG 3.

The database 118 stores the information relating to the technical installation and the one or more client device(s) 120AN. The database 118 is, for example, a structured query language (SQL) data store or a not only SQL (NoSQL) data store. In an exemplary embodiment, the database 118 may be configured as cloud-based database implemented in the industrial environment 100, where computing resources are delivered as a service over the platform 110. The database 118, according to another embodiment of the present invention, is a location on a file system directly accessible by the automation module 112. The database 118 is configured to store the plurality of virtual engineering objects such as engineering project files, engineering programs, object behavior model, parameter values associated with the plurality of engineering objects 108A-N, test results, simulation results, status messages, one or more simulation instances, graphical programs, program logics, program logic patterns, product manuals of the plurality of engineering objects 108A-N and engineering object properties, one or more engineering object blocks, relationship information between the engineering objects, requirements, program update messages and the like.

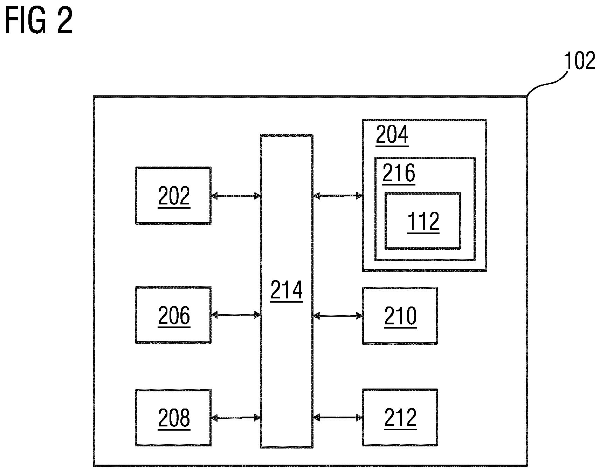

FIG 2 is a block diagram of an engineering system 102, such as those shown in FIG 1, in which an embodiment of the present invention can be implemented. In FIG 2, the engineering system 102 includes a processing unit 202, an accessible memory 204, a storage unit 206, a communication interface 208, an input-output unit 210, a network interface 212 and a bus 214.

The processing unit 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The processing unit 202 may also include embedded controllers, such as generic or programmable logic devices or arrays, application specific integrated circuits, single-chip computers, and the like.

The memory 204 may be non-transitory volatile memory and nonvolatile memory. The memory 204 may be coupled for communication with the processing unit 202, such as being a computer-readable storage medium. The processing unit 202 may execute machine-readable instructions and/or source code stored in the memory 204. A variety of machine-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 204 includes an integrated development environment (IDE) 216. The IDE 216 includes an automation module 112 stored in the form of machine-readable instructions on any of the above-mentioned storage media and may be in communication with and executed by the processor(s) 202.

When executed by the processing unit 202, the automation module 112 causes the processing unit 202 to receive a request to generate the plurality of metadata tags 124A-N for each of the plurality of engineering objects 108A-N of the engineering project 106 in the technical installation. The technical installation is at least one of an industrial manufacturing plant, an industrial processing plant, an industrial power plant, or even public building such as hospitals. In one example, the plurality of engineering objects 108A-N are devices which function together in the technical installation to achieve one or more objectives of the technical installation.

The plurality of metadata tags 124A-N comprises information associated with each of the plurality of engineering objects. A metadata tag (for example, 124A) of an engineering object (for example, 108A) comprises a purpose, a function, a specification, a manufacturer details, a unique identification code and a maintenance detail associated with the specific engineering object 108A. The metadata tag 124A further comprises an identification number and a location of the specific engineering object 108A.

A commissioning engineer is enabled to read the metadata tag to understand functioning of the specific engineering object 108A. The plurality of engineering objects 108A-N are operated by use of a plurality of virtual engineering objects.

Examples of the plurality of virtual engineering objects comprises program files, programming blocks, program logic and machine learning models. For example, the plurality of virtual engineering objects comprises the one or more engineering programs executed by the processing unit 202 of the plurality of engineering objects 108A-N. The plurality of virtual engineering objects comprises instructions to run the plurality of engineering objects 108A-N smoothly.

The automation module 112 further causes the processing unit 202 to convert a plurality of documents, associated with the engineering project, into an automation markup language file. The plurality of documents comprises process related documents like process operation description document, process flowchart, and process control philosophy, process and instrumentation diagrams, and non-process documents such as bill of materials, brochures, and product manuals. The plurality of documents are converted by application of a natural language processing algorithm on the plurality of documents.

The generated automation markup language file is further analyzed by the processing unit 202.

The automation module 112 further causes the processing unit 202 to generate an ontology schema based on an analysis of the automation markup language file. The ontology schema may be a knowledge graph based ontology schema. The ontology schema comprises information associated with interrelationships between one or more data items in the automation markup language file and the plurality of engineering objects 108A-N of the engineering project 106.

The automation module 112 further causes the processing unit 202 to classify a plurality of nodes of the ontology schema into a plurality of groups, by application of a deep learning model on the plurality of nodes of the ontology schema. Examples of the deep learning model includes, but is not limited to convolutional neural network (CNN) and long short term memory networks (LSTM). The deep learning model is trained to determine references to the plurality of engineering objects 108A-N, in the plurality of documents. Further, the deep learning model is trained to extract a plurality of properties associated with the plurality of engineering objects 108A-N, from the plurality of documents, or from the ontology schema associated with the plurality of documents. Examples of the plurality of properties comprises a voltage rating, a power rating, a purpose, a function, a specification, a manufacturer details, and a maintenance details associated with the plurality of engineering objects 108A-N.

The automation module 112 further causes the processing unit 202 to determine from the analyzed plurality of documents, a plurality of data items in which information associated with the one or more properties of each of the plurality of engineering objects 108A-N is mentioned in the analyzed plurality of documents. The plurality of data items are excerpts of the plurality of documents in which any one of the plurality of engineering objects 108A-N is mentioned. For example, the plurality of engineering objects 108A-N may include a motor. Further, the plurality of documents may include a product manual of the motor and a process and instrumentation diagram (P&ID diagram) of the technical installation. In such a case, the plurality of data items may include a portion of the product manual which illustrates a power rating and voltage rating of the motor, and a portion of the P&ID diagram which illustrates a interconnection of the motor with other engineering objects in the technical installation.

In one embodiment, determination of the plurality of data items is executed iteratively by the processing unit 202 via a plurality of iterations. In such a case, each iteration of the plurality of iteration begins with a first step of analyzing, by the processing unit 202, an input set of artifacts in the ontology schema or the plurality of documents by application of the Deep learning model. In one example, the input set of artifacts comprises one or more knowledge graph instances from the ontology schema. In another example, the input set of artifacts comprises one or more data items from the plurality of documents. Then, each iteration further comprises a second step of determining, by the processing unit 202, one or more relevant data items in the input set of artifacts, based on the analysis of the input set of artifacts. The deep learning model is trained to determine the one or more relevant data items in the input set of artifacts. Then, the iteration further comprises a third step of eradicating, by the processing unit 202, data items which are not relevant data items, from the input set of artifacts to generate a first set of smart artifacts. Then, the iteration further executes a fourth step of generating, by the processing unit 202, a preprocessing dataset from the analyzed input set of artifacts. The preprocessing dataset comprises one or more relevant data items from the input set of artifacts. Finally, the final step of each iteration comprises generating, by the processing unit 202, a second set of smart artifacts based on a comparison of the generated first set of smart artifacts and the preprocessing dataset. The second set of smart artifacts are used as the input set of artifacts in a subsequent iteration of the plurality of iterations.

The automation module 112 further causes the processing unit 202 to determine a plurality of properties associated with one or more engineering objects corresponding to each of the second set of smart artifacts. The plurality of properties comprises a name, a function, a specification, a power rating, and a type of the one or more engineering objects.

The automation module 112 further causes the processing unit 202 to determine a set of nodes of the ontology schema, which corresponds to the determined one or more smart artifacts. The automation module 112 further causes the processing unit 202 to analyze the determined set of nodes to determine the plurality of data items in the analyzed plurality of documents. The automation module 112 further causes the processing unit 202 to generate a dataset comprising information associated with the plurality of properties of the plurality of engineering objects, from the determined plurality of data items. Further, the dataset comprises interrelationships and interconnections between each of the plurality of engineering objects of the engineering project.

The automation module 112 further causes the processing unit 202 to analyze the determined plurality of data items by using the natural language processing algorithm. The automation module 112 further causes the processing unit 202 to determine the one or more properties of each of the plurality of engineering objects 108A-N of the engineering project 106 based on the analysis of the plurality of data items in which information associated with each of the plurality of engineering objects 108A-N is mentioned in the analyzed plurality of documents.

The automation module 112 further causes the processing unit 202 to generate a metadata item comprising information associated with the plurality of properties of each of the plurality of engineering objects. The automation module 112 further causes the processing unit 202 to generate a unique identification tag for each of the plurality of engineering objects. The automation module 112 further causes the processing unit 202 to generate the plurality of metadata tags by combining the metadata item associated with each engineering object and the unique identification tag of the respective engineering object of the plurality of engineering objects.

The automation module 112 further causes the processing unit 202 to generate the plurality of metadata tags for each of the plurality of engineering objects of the engineering project.

The plurality of metadata tags comprises a location of each of the plurality of engineering objects of the engineering project.

The automation module 112 further causes the processing unit 202 to map each of the plurality of metadata tags to a virtual engineering object corresponding to each of the plurality of engineering objects. The automation module 112 further causes the processing unit 202 to display the location of each of the plurality of engineering objects in a display device.

Advantageously, the plurality of properties of the plurality of engineering objects are available to a commissioning engineer through the generated plurality of metadata tags. For example, advantageously, a location of each of the plurality of engineering objects is readily available to a human operator via the generated plurality of metadata tags. Further advantageously, the plurality of metadata tags are generated automatically by the processing unit, thus sparing the human operator of reading thousands of pages of documents associated with the plurality of engineering objects. Furthermore advantageously, all information pertaining to an engineering object is collated into a metadata tag associated with the engineering object, and is thus readily available to the human operator. Furthermore, a code of one or more engineering programs is enabled to access engineering data associated with the plurality of engineering objects from the plurality of metadata tags.

The automation module 112 further causes the processing unit 202 to integrate the plurality of metadata tags into the plurality of virtual engineering objects associated with the plurality of engineering objects of the engineering project. In one example, the plurality of virtual engineering objects are runtime objects which denote one or more of the plurality of engineering objects. In such a case, the generated metadata tags are integrated into the said runtime objects.

The storage unit 206 may be a non-transitory storage medium configured for storing a database (such as database 118) which comprises server version of the plurality of programming blocks associated with the set of industrial domains.

The communication interface 208 is configured for establishing communication sessions between the one or more client devices 120A-N and the engineering system 102. The communication interface 208 allows the one or more engineering applications running on the client devices 120A-N to import/export engineering project files into the engineering system 102.

In an embodiment, the communication interface 208 interacts with the interface at the one or more client devices 120A-N for allowing the engineers to access the engineering programs associated with an engineering project file and perform one or more actions on the engineering programs stored in the engineering system 102.

The input-output unit 210 may include input devices a keypad, touch-sensitive display, camera (such as a camera receiving gesture-based inputs), etc. capable of receiving one or more input signals, such as user commands to process engineering project file. Also, the input-output unit 210 may be a display unit for displaying a graphical user interface which visualizes the behavior model associated with the modified engineering programs and also displays the status information associated with each set of actions performed on the graphical user interface. The set of actions may include execution of predefined tests, download, compile and deploy of graphical programs. The bus 214 acts as interconnect between the processor 202, the memory 204, and the input-output unit 210.

The network interface 212 may be configured to handle network connectivity, bandwidth and network traffic between the engineering system 102, client devices 120A-N and the technical installation 106.

Those of ordinary skilled in the art will appreciate that the hardware depicted in FIG 2 may vary for particular implementations. For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of an engineering system 102 as is unique to the present disclosure or necessary for an understanding of the present disclosure is depicted and described. The remainder of the construction and operation of the engineering system 102 may conform to any of the various current implementation and practices known in the art.

FIG 3 is a block diagram of an automation module 112, such as those shown in FIG 2, in which an embodiment of the present invention can be implemented. In FIG 3, the automation module 112 comprises a request handler module 302, an object behavior model generation module 304, an analysis module 306, a natural language processing module 308, an engineering object database 310, a validation module 312 and a deployment module 314. FIG 3 is explained in conjunction with FIG 1 and FIG 2.

The request handler module 302 is configured for receiving the request to generate the plurality of metadata tags 124A-N associated with the engineering project 106. For example, the request is received from one of the one or more users external to the industrial environment 100 via the network 104. In alternative embodiment, the request is received from the one or the one or more client devices 120A-N via the network 104.

The object behavior model generation module 304 is configured for generating the ontology schema of the automation markup language file. In a preferred embodiment, the generated ontology schema comprises information about relationships between a set of variables corresponding to each document of the plurality of documents and the plurality of engineering objects 108A-N of the engineering project 106. In one example, the ontology schema is a knowledge graph based representation comprising a plurality of layers.

The analysis module 306 is configured for analyzing the ontology schema associated with the automation language markup file associated with the plurality of documents. Specifically, the analysis module 306 is configured for applying the deep learning model on the ontology schema.

The natural language processing module 308 is configured for converting the plurality of documents into the automation language markup file.

The engineering object database 310 is configured for generating an engineering object library comprising the generated object behavior models, information about the plurality of engineering objects 108A-N, information about physical connections between the plurality of engineering objects 108A-N, and a plurality of parameter values associated with the plurality of engineering objects 108A-N and the physical connections. The engineering object database 310 is configured for continuously updating the engineering object library with updated versions of the engineering programs. Also, the engineering object database 310 is configured for maintaining the engineering object library in an ontology schema.

The validation module 312 is configured to generate a simulation instance for the plurality of engineering objects 108A-N of the technical installation. In one example, the simulation instance is a digital twin of the plurality of engineering objects 108A-N. The validation module 312 is configured to simulate execution of one or more engineering programs by the plurality of engineering objects 108A-N of the technical installation in a simulation environment by executing the one or more engineering programs on the generated simulation instance.

The deployment module 314 is configured for integrating the plurality of metadata tags 124A-N in real-time onto the plurality of engineering objects 108A-N installed in the technical installation during runtime.

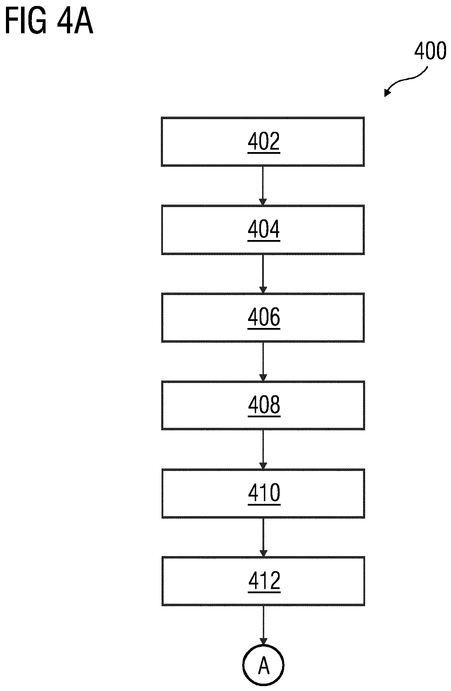

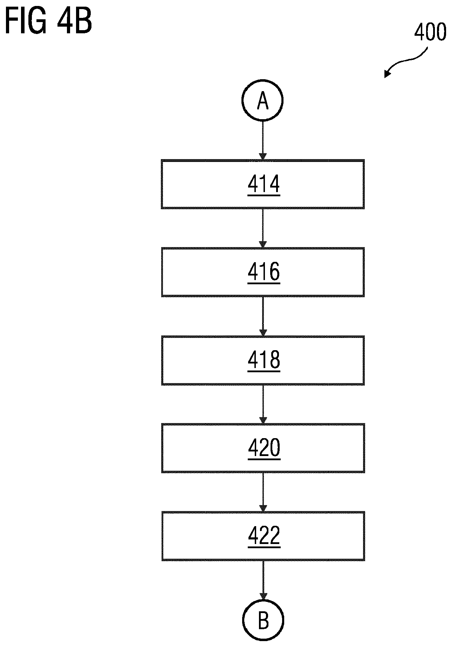

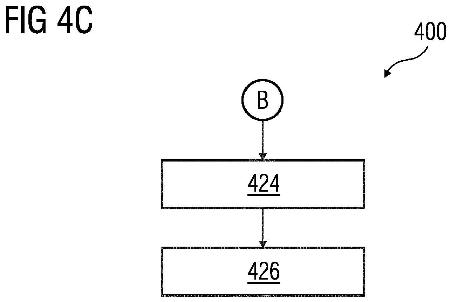

FIG 4A-D is a process flowchart illustrating an exemplary method 400 of generating a plurality of metadata tags 124A-N in an engineering system 102, according to an embodiment of the present invention. FIG 4A-D is described in conjunction with FIG 1, 2, and 3.

At step 402, a request to generate the plurality of metadata tags 124A-N for each of the plurality of engineering objects 108A-N of the engineering project 106 in the technical installation, is received by the processing unit 202. The technical installation is at least one of an industrial manufacturing plant, an industrial processing plant, an industrial power plant, or even public building such as hospitals. In one example, the plurality of engineering objects 108A-N are devices which function together in the technical installation to achieve one or more objectives of the technical installation.

The plurality of metadata tags 124A-N comprises information associated with each of the plurality of engineering objects 108A-N. A metadata tag (for example, 124A) of an engineering object (for example, 108A) comprises a purpose, a function, a specification, a manufacturer details, a unique identification code and a maintenance detail associated with the specific engineering object 108A. The metadata tag 124A further comprises an identification number and a location of the specific engineering object 108A. Advantageously, a commissioning engineer is enabled to read the metadata tag to understand functioning of the specific engineering object 108A. The plurality of engineering objects 108A-N are operated by use of a plurality of virtual engineering objects.

Examples of the plurality of virtual engineering objects comprises program files, programming blocks, program logic and machine learning models. For example, the plurality of virtual engineering objects comprises the one or more engineering programs executed by the processing unit 202 of the plurality of engineering objects 108A-N. The plurality of virtual engineering objects comprises instructions to run the plurality of engineering objects 108A-N smoothly.

At step 404, a plurality of documents, associated with the engineering project 106, are converted by the processing unit 202 into an automation markup language file. The plurality of documents comprises process related documents like process operation description document, process flowchart, and process control philosophy, process and instrumentation diagrams, and non-process documents such as bill of materials, brochures, and product manuals. The plurality of documents are converted by application of a natural language processing algorithm on the plurality of documents. The generated automation markup language file is further analyzed by the processing unit 202.

At step 406, an ontology schema is generated by the processing unit 202 based on an analysis of the automation markup language file. The ontology schema may be a knowledge graph based ontology schema. The ontology schema comprises information associated with interrelationships between one or more data items in the automation markup language file and the plurality of engineering objects 108A-N of the engineering project 106.

At step 408, a plurality of nodes of the ontology schema are classified by the processing unit 202 into a plurality of groups, by application of a deep learning model on the plurality of nodes of the ontology schema. Examples of the deep learning model includes, but is not limited to convolutional neural network (CNN) and long short term memory networks (LSTM). The deep learning model is trained to determine references to the plurality of engineering objects 108A-N, in the plurality of documents. Further, the deep learning model is trained to extract a plurality of properties associated with the plurality of engineering objects 108A-N, from the plurality of documents, or from the ontology schema associated with the plurality of documents. Examples of the plurality of properties comprises a voltage rating, a power rating, a purpose, a function, a specification, a manufacturer details, and a maintenance details associated with the plurality of engineering objects 108A-N.

At step 410, a plurality of data items in which information associated with each of the plurality of engineering objects 108A-N is mentioned in the analyzed plurality of documents, is determined by the processing unit 202. The plurality of data items are excerpts of the plurality of documents in which any one of the plurality of engineering objects 108A-N is mentioned. For example, the plurality of engineering objects 108A-N may include a motor. Further, the plurality of documents may include a product manual of the motor and a process and instrumentation diagram (P&ID diagram) of the technical installation. In such a case, the plurality of data items may include a portion of the product manual which illustrates a power rating and voltage rating of the motor, and a portion of the P&ID diagram which illustrates a interconnection of the motor with other engineering objects in the technical installation.

In one embodiment, determination of the plurality of data items is executed iteratively by the processing unit 202 via a plurality of iterations. In such a case, each iteration of the plurality of iteration begins with a first step of analyzing, by the processing unit 202, an input set of artifacts in the ontology schema or the plurality of documents by application of the Deep learning model. In one example, the input set of artifacts comprises one or more knowledge graph instances from the ontology schema. In another example, the input set of artifacts comprises one or more data items from the plurality of documents. Then, each iteration further comprises a second step of determining, by the processing unit 202, one or more relevant data items in the input set of artifacts, based on the analysis of the input set of artifacts.

The deep learning model is trained to determine the one or more relevant data items in the input set of artifacts. Then, the iteration further comprises a third step of eradicating, by the processing unit 202, data items which are not relevant data items, from the input set of artifacts to generate a first set of smart artifacts. Then, the iteration further executes a fourth step of generating, by the processing unit 202, a preprocessing dataset from the analyzed input set of artifacts. The preprocessing dataset comprises one or more relevant data items from the input set of artifacts. Finally, the final step of each iteration comprises generating, by the processing unit 202, a second set of smart artifacts based on a comparison of the generated first set of smart artifacts and the preprocessing dataset. The second set of smart artifacts are used as the input set of artifacts in a subsequent iteration of the plurality of iterations.

At step 412, a plurality of properties associated with one or more engineering objects corresponding to each of the second set of smart artifacts, are determined by the processing unit 202. The plurality of properties comprises a name, a function, a specification, a power rating, and a type of the one or more engineering objects.

At step 414, at least one engineering object, of the plurality of engineering objects 108A-N, having properties which are similar to the determined plurality of properties associated with each of the second set of smart artifacts, is determined by the processing unit 202.

At step 416, the determined at least one engineering object is mapped by the processing unit 202 to one or more smart artifacts of the second set of smart artifacts.

At step 418, a set of nodes of the ontology schema, which corresponds to the determined one or more smart artifacts are determined by the processing unit 202. The processing unit 202 is configured to to analyze the determined set of nodes to determine the plurality of data items in the analyzed plurality of documents.

At step 420, a dataset comprising information associated with the plurality of properties of the plurality of engineering objects 108A-N, is determined from from the determined plurality of data items. Further, the dataset comprises interrelationships and interconnections between each of the plurality of engineering objects 108A-N of the engineering project 106.

At step 422, the determined plurality of data items are analyzed by the processing unit 202 by using the natural language processing algorithm. The processing unit 202 is configured to determine the one or more properties of each of the plurality of engineering objects 108A-N of the engineering project 106 based on the analysis of the plurality of data items in which information associated with each of the plurality of engineering objects 108A-N is mentioned in the analyzed plurality of documents.

The processing unit 202 is configured to generate a metadata item comprising information associated with the plurality of properties of each of the plurality of engineering objects 108A-N. The processing unit 202 is further configured to generate a unique identification tag for each of the plurality of engineering objects 108A-N. The processing unit 202 is further configured to generate the plurality of metadata tags 124A-N by combining the metadata item associated with each engineering object and the unique identification tag of the respective engineering object of the plurality of engineering objects 108A-N.

At step 424, the plurality of metadata tags is generated by the processing unit 202 for each of the plurality of engineering objects 108A-N of the engineering project 106. The plurality of metadata tags 124A-N comprises a location of each of the plurality of engineering objects 108A-N of the engineering project 106.

At step 426, each of the plurality of metadata tags are mapped to a virtual engineering object corresponding to each of the plurality of engineering objects 108A-N, by the processing unit 202. The processing unit 202 to display the location of each of the plurality of engineering objects 108A-N in a display device such as the client devices 120A-N.

Advantageously, the plurality of properties of the plurality of engineering objects 108A-N are available to a commissioning engineer through the generated plurality of metadata tags 124A-N. For example, advantageously, a location of each of the plurality of engineering objects 108A-N is readily available to a human operator via the generated plurality of metadata tags 124A-N. Further advantageously, the plurality of metadata tags 124A-N are generated automatically by the processing unit 202, thus sparing the human operator of reading thousands of pages of documents associated with the plurality of engineering objects 108A-N. Furthermore advantageously, all information pertaining to an engineering object is collated into a metadata tag associated with the engineering object, and is thus readily available to the human operator. Furthermore, a code of one or more engineering programs is enabled to access engineering data associated with the plurality of engineering objects 108A-N from the plurality of metadata tags 124A-N.

The automation module 112 further causes the processing unit 202 to integrate the plurality of metadata tags 124A-N into the plurality of virtual engineering objects associated with the plurality of engineering objects 108A-N of the engineering project 106. In one example, the plurality of virtual engineering objects are runtime objects which denote one or more of the plurality of engineering objects 108A-N. In such a case, the generated metadata tags are integrated into the said runtime objects.

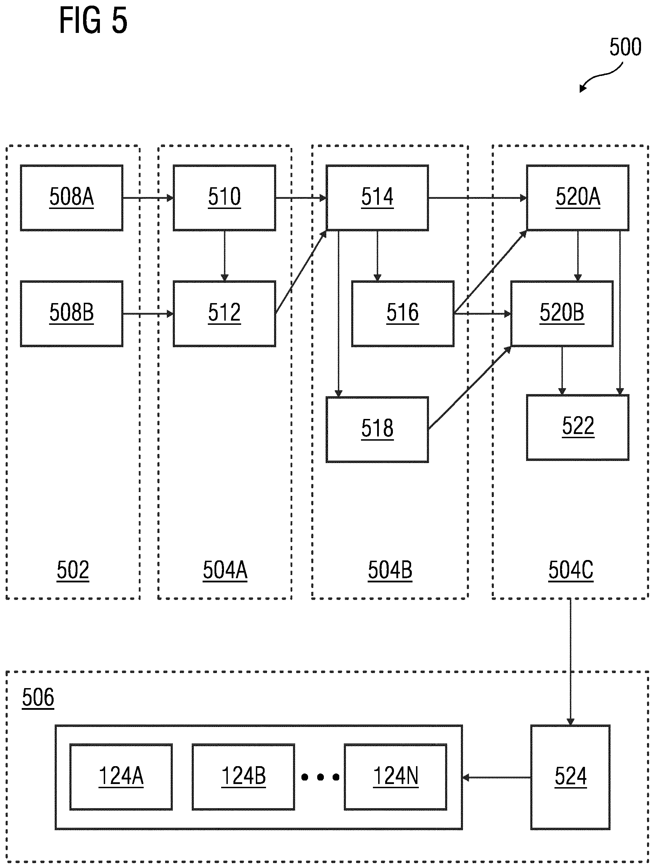

FIG 5 is a schematic representation of an exemplary process of generating the plurality of metadata tags 124A-N for a plurality of engineering objects 108A-N, according to an embodiment of the present invention.

As discussed, the plurality of metadata tags 124A-N are generated from the plurality of data items in which the plurality of engineering objects 108A-N are mentioned in the plurality of documents.

The processing unit 202 is configured to generate the plurality of metadata tags 124A-N by executing one or more steps in each of an input stage 502, a plurality of iterative stages 504A-C and a final stage 506. The iterative stage 504A-C comprises at least a first iteration 504A, a second iteration 504B, and a third iteration 504C. It is noted that the plurality of iterative stages 504A-C may have more than three iterations.

In the input stage 502, the plurality of documents are converted into an input set of artifacts 508A-B. To generate the input set of artifacts 508A-B, a plurality of data items in the plurality of documents are processed by the processing unit 202. The processing unit 202 generates a plurality of combinations of the plurality of data items. In one example, the input set of artifacts 508A-B comprises plurality of combinations of the plurality of data items.

For example, the plurality of documents may contain a first document comprising two data items: a location of a motor and a location of a furnace. Further, the plurality of documents may contain a second document comprising two data items: a name of a motor and a name of a furnace. In such a case, the processing unit 202 is configured to generate the plurality of combinations comprising a first combination of the location of the motor and the name of the motor, a second combination of the location of the motor and the name of the furnace, a third combination of the location of the furnace and the name of the motor, and a fourth combination of the location of the furnace and the name of the furnace. Thus, the input set of artifacts 508A-B comprises information about the first combination, the second combination, the third combination, and the fourth combination. In the first iteration 504A, the processing unit 202 is configured to analyzing, by the processing unit 202, the input set of artifacts 508A-B by application of the Deep learning model. The deep learning model is trained to determine the one or more relevant data items in the input set of artifacts 508A-B.

For example, the deep learning model is trained to determine the first combination as relevant data item as the first combination comprises name and location of a single engineering object, that is, the motor. Similarly, the deep learning model is trained to determine the fourth combination as a relevant data item as the fourth combination comprises name and location of a single engineering object, that is, the furnace.

The deep learning model is trained to determine the second combinationas irrelevant data items as the second combination comprises the location of the motor and the name of the furnace. Thus, the second combination is erroneous.

In the first iteration 504A, the one or more relevant data items are determined by the processing unit 202, from the input set of artifacts 508A-B, based on the analysis of the input set of artifacts 508A-B. Then, data items which are not relevant data items are eradicated by the processing unit 202 from the input set of artifacts 508A-B to generate a first preprocessing dataset 510. The preprocessing dataset comprises one or more relevant data items from the input set of artifacts 508A-B. Further, a first smart artifact 512 is generated from the first preprocessing dataset 510. The processing unit 202 is further configured to generate a plurality of combination from data items in the first preprocessing dataset 510 and the first smart artifact 512. Thus, the first preprocessing dataset 510 and the first smart artifact 512 are input to the second iteration 504B. Similarly, the processing unit 202 is configured to generate a second preprocessing dataset 514 in the second iteration 504B. Similarly, the processing unit 202 is configured to generate a second smart artifact 516 and a third smart artifact 518 in the second iteration 504B. Similarly, the processing unit 202 is configured to generate a third preprocessing dataset 520A and a fourth preprocessing dataset 520B in the third iteration 504C. The processing unit 202 is configured to generate a fourth smart artifact 522 in the third iteration 504C.

The processing unit 202 is further configured to generate a final dataset 524 from a plurality of data sets and a plurality of smart artifacts generated in the iterative stages 504A-C. The final dataset 524 comprises information associated with the one or more properties of the plurality of engineering objects 108A-N. The processing unit 202 is further configured to generate the plurality of metadata tags 124A-N from the final dataset 524.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

### Reference list

1. an industrial environment 100
2. an engineering system 102
3. one or more client devices 120A-N
4. a network 104
5. engineering project 106
6. plurality of engineering objects 108A-N
7. one or more client devices 120A-N
8.the plurality of metadata tags 124A-N
9. a platform 110
10. an automation module 112
11. a server 114
12. a network interface 116
13. a database 118
14. a processor(s) 202
15. an accessible memory 204
16. a storage unit 206
17. a communication interface 208
18. an input-output unit 210
19. a network interface 212
20. a bus 214
21. an integrated development environment (IDE) 216
22. a request handler module 302,
23. an object behavior model generation module 304,
24. an analysis module 306,
25. a natural language processing module 308
26. an engineering object database 310
27. a validation module 312
28. a deployment module 314.
29. the input set of artifacts 508A-B
30. the input stage 502
31. a plurality of iterative stages 504A-C
32. a final stage 506
33. the first preprocessing dataset 510
34. the first smart artifact 512
35. second preprocessing dataset 514
36. second smart artifact 516
37. a fourth smart artifact 522

## Claims

1. A method of generating a plurality of metadata tags (124AN) for a plurality of engineering objects (108A-N) of an engineering project (106), the method comprising:
receiving, by a processing unit (202), a request to generate the plurality of metadata tags (124A-N) for each of the plurality of engineering objects (108A-N) of the engineering project (106);
analyzing, by the processing unit (202), a plurality of documents associated with the engineering project (106) using a deep learning model;
determining, by the processing unit (202), a plurality of data items which contain information associated with one or more properties of each of the plurality of engineering objects (108A-N) in the analyzed plurality of documents;
generating, by the processing unit (202), a dataset (524) comprising information associated with the one or more properties of the plurality of engineering objects (108A-N) from the determined plurality of instances; and
generating, by the processing unit (202), the plurality of metadata tags (124A-N) for each of the plurality of engineering objects (108A-N) of the engineering project (106), wherein the plurality of metadata tags (124A-N) comprises information associated with the one or more properties of each of the plurality of engineering objects (108A-N).

2. The method according to claim 1, further comprising:
integrating, by the processing unit (202), the plurality of metadata tags (124A-N) into a plurality of virtual engineering objects associated with the plurality of engineering objects (108A-N) of the engineering project (106) .

3. The method according to claims 1 or 2, wherein analyzing the plurality of documents using the deep learning model comprises:
converting, by the processing unit (202), the plurality of documents into an automation markup language file by application of a natural language processing algorithm on the plurality of documents;
generating, by the processing unit (202), an ontology schema based on an analysis of the automation markup language file, wherein the ontology schema comprises information associated with interrelationships between one or more data items of the automation markup language file, and the plurality of engineering objects (108A-N) of the engineering project (106); and
classifying, by the processing unit (202), a plurality of nodes of the ontology schema into a plurality of groups of nodes by application of the deep learning model on the plurality of nodes of the ontology schema, wherein each group of nodes of the plurality of group of nodes correspond to a specific engineering object of the plurality of engineering objects (108A-N).

4. The method according to claim 3, wherein determination of the plurality of data items which contain information about the plurality of engineering objects (108A-N) is executed in a plurality of iterations (504A-C), wherein each iterative stage comprises:
analyzing, by the processing unit (202), an input set of artifacts (508A-B) in the ontology schema by application of the Deep learning model;
determining, by the processing unit (202), one or more relevant data items in the input set of artifacts (508A-B), based on the analysis of the first set of artifacts in the ontology schema;
eradicating, by the processing unit (202), data items which are not relevant data items, from the input set of artifacts (508A-B) to generate a first set of smart artifacts;
generating, by the processing unit (202), a preprocessing dataset (510) from the analyzed input set of artifacts (508A-B), wherein the preprocessing dataset (510) comprises one or more relevant data items from the input set of artifacts (508A-B); and
generating, by the processing unit (202), an output set of smart artifacts based on an analysis of the generated first set of smart artifacts and the preprocessing dataset (510), by use of the deep learning model, wherein the output set of smart artifacts are used as the input set of artifacts (508A-B) in a subsequent iteration of the plurality of iterations (504A-C).

5. The method according to claims 1 or 4, wherein determining the plurality of data items further comprises:
mapping, by the processing unit (202), each of the second set of smart artifacts to the one or more of the plurality of engineering objects (108A-N); and
determining, by the processing unit (202), in the ontology schema, a set of nodes which corresponds to the one or more engineering objects based on the mapping; and
analyzing, by the processing unit (202), the determined set of nodes to determine from the plurality of documents, the plurality of data items which comprises information associated with each of the plurality of engineering objects (108A-N).

6. The method according to claim 5, wherein generating the dataset (524) comprising the one or more properties of each of the plurality of engineering object (108A-N) comprises:
analyzing, by the processing unit (202), the determined plurality of data items by using a natural language processing algorithm; and
determining, by the processing unit (202), the one or more properties of each of the plurality of engineering object (108A-N) of the engineering project (106) based on the analysis of the plurality of data items in the analyzed plurality of documents.

7. The method according to claim 1, wherein generating the plurality of metadata tags (124A-N) comprises:
generating, by the processing unit (202), a metadata item comprising information associated with the one or more properties of each of the plurality of engineering objects (108AN) ;
generating, by the processing unit (202), a unique identification tag for each of the plurality of engineering objects (108A-N); and
generating, by the processing unit (202), the plurality of metadata tags (124A-N) by combining the metadata item associated with each engineering object and the unique identification tag of the respective engineering object of the plurality of engineering objects (108A-N).

8. The method according to claim 7, wherein the plurality of metadata tags (124A-N) comprises a location of each of the plurality of engineering objects (108A-N) of the engineering project (106) .

9. The method according to claim 8, further comprising:
mapping, by the processing unit (202), each of the plurality of metadata tags (124A-N) to a virtual engineering object corresponding to each of the plurality of engineering objects (108A-N).

10. The method according to claim 9, further comprising:
displaying, by the processing unit (202), the location of each of the plurality of engineering objects (108A-N) in a display device.

11. An engineering system for generation of a plurality of metadata tags (124A-N) for a plurality of engineering objects (108A-N) in an engineering project (106), wherein the engineering system comprises:
one or more processor(s) (202); and
a memory (204) coupled to the one or more processor(s), wherein the memory comprises an automation module stored in the form of machine-readable instructions executable by the one or more processor(s), wherein the automation module (112) is capable of performing a method according to any of the claims 1-10.

12. An industrial environment (100) comprising:
an engineering system (102) as claimed in claim 11;
a technical installation comprising one or more physical components; and
one or more client devices (120A-N) communicatively coupled to the engineering system (102) via a network (104), wherein the engineering system (102) is configured to perform a method according to any of the claims 1 to 10.

13. A computer-program product, having machine-readable instructions stored therein, that when executed by a processing unit (202), cause the processors to perform a method according to any of the claims 1-10.
